Europäisches Patentamt

European Patent Office

Office européen des brevets

(11) Publication number: **0 190 028 B1**

# EUROPEAN PATENT SPECIFICATION

(45) Date of publication of patent specification: **18.03.92**

(51) Int. Cl.⁵: **A23B 4/00**, A23B 4/12, A23B 4/14

(21) Application number: **86300545.0**

(22) Date of filing: **28.01.86**

(54) Method of thermally processing seafood and package having the seafood therein.

(30) Priority: **28.01.85 US 695463**
**24.06.85 US 747590**

(43) Date of publication of application:
**06.08.86 Bulletin 86/32**

(45) Publication of the grant of the patent:
**18.03.92 Bulletin 92/12**

(84) Designated Contracting States:
**AT BE CH DE FR GB IT LI LU NL SE**

(56) References cited:
**GB-A- 2 036 533**
**US-A- 4 262 027**

**FSTA, no. 81-06-r0393 (81033164);**
**O.CHRISTIANS: "Development of matured krill sausage"**

**FSTA, no. 73-10-R0466 (73052989)**

(73) Proprietor: **AMERICAN NATIONAL CAN COMPANY**
**8770 West Bryn Mawr Avenue**
**Chicago, Illinois 60631(US)**

(72) Inventor: **McIntyre, Deborah Jean**
**2236 W. Nichols, No. F**
**Arlington Heights, IL 60174(US)**

(74) Representative: **Harvey, David Gareth et al**
**Graham Watt & Co. Riverhead**
**Sevenoaks Kent TN13 2BN(GB)**

**Description**

This invention relates to packaging of seafood and the thermal processing of shrimp and other seafoods, which at present have to be heavily salted to retain their texture during commercial sterilization processing and storage.

Some seafood has to be heavily salted prior to being thermally processed in order to retain an acceptable texture. By "thermal processing" is meant the seafood has been subjected to a time/temperature parameter which results in a "commercially sterilized" food, as defined in U.S. Title 21 CFR Part 113 (Definitions, Sec. 113.3) as follows:

"Commercial sterility of thermally processed food means the condition achieved --

"(i) By the application of heat which renders the food free of --

"(a) Microorganisms capable of reproducing in the food under normal nonrefrigerated conditions of storage and distribution; and

"(b) Viable microorganisms (including spores) of public health significance; or

"(ii) By the control of water activity and the application of heat, which render the food free of microorganisms capable of reproducing in the food under normal nonrefrigerated conditions of storage and distribution."

"Texture" herein generically refers to firmness in relation to touch and bite, and to material consistency and physical integrity. According to the present state of the art, if salt is not used, there is a loss of texture resulting in lack of firmness and resistance to one's bite which is deemed unacceptable by many people.

From the moment of the death of a fish, e.g., the shrimp there is a deterioration in texture due to enzymatic and bacterial action. The result is a breakdown of the connective tissue. Although enzymatic action is terminated by the blanching process, shrimp are extremely heat sensitive and further loss of texture occurs due to the elevated temperatures involved in thermal processing. Conventionally, a heavy dosage of salt is added to preserve the texture of the blanched shrimp which would otherwise be lost during thermal processing.

To enhance texture retention, some seafoods such as shrimp are presently heavily salted both during the blanch and also in brine immediately prior to thermal processing. Usually, there is 5% by weight sodium chloride in the brine. The salt in neither the blanch nor the brine serves the role of a food preservative. The consumer ordinarily removes some salt from the seafood by a water wash or leach before the product is served. Nonetheless, a considerable amount of salt is or may be retained in the seafood, in a quantity which many medical authorities consider inimical to health, notably inducement of hypertension due to sodium retention.

Proteinaceous foods such as seafoods contain sulfur compounds which break down when heated to form hydrogen sulfide. The reaction of the hydrogen sulfide with exposed metal often produces a dark discoloration found in cans of protein-containing foods. Although the dark sulfide compound formed is harmless to health, it detracts from the appearance of the can and when transferred to the product detracts from the appearance of the product.

Scientific studies have shown that the amount of sulfide released from seafood during thermal processing can be related to the acidity of the product. Seafoods, and particularly shell fish, have a tendency toward rapid degradation and a resultant high pH. Good handling conditions such as prompt icing and rapid processing are very important since they affect pH level and sulfide formation. Acidification reduces the pH and the consequent likelihood of black iron sulfide formation. Citric acid is frequently added to the brine by shrimp canners in an attempt to inhibit sulfide build-up and consequent product discoloration, but treatment with citric acid does not always fully inhibit build-up. This build-up is most likely to occur at the side seam of a three-piece metal can, or at the countersink area, or on the profile rings of the container end.

The present invention aims to produce canned seafood, for example shrimp, which compares favorably with the fresh or frozen product which is not thermally processed. We seek, for example, to retain the texture of seafood, during thermal processing and storage by a treatment which avoids heavy salting, whereby soaking or washing to rid the seafood of excessive salt before eating can be avoided, and whereby flavor close to that of the fresh product, unimpaired by salt, can be achieved.

The invention involves combining a hydrolysis mixture of an aldonic acid and its lactones with the seafood to be processed. A particularly preferred acid is gluconic acid which replaces salt for texturing.

By use of the invention, a reduction in discoloration of the seafood and of the metal can in which the seafood may be packed can be gained, and where the seafood is commercially sterilized shrimp, it can have a clean shrimp flavor and odor.

Practice of this invention eliminates the need for or the use of citric acid in brine to reduce black iron sulfide formation and consequent product discoloration. When glucono-delta lactone is hydrolyzed to gluconic acid, the gluconic acid can perform the same inhibiting action as citric acid. Thus, when GDL is used alone in the brine, neither salt nor citric acid needs to be included since the gluconic acid formed from hydrolysis of the GDL performs these texturing and inhibiting functions.

The use of glucono-delta lactone has previously been disclosed in US-A-4 262 027 in relation to the formation of meat emulsions.

According to the present invention, there is provided a hermetically sealed package containing seafood normally processed in a salt-containing brine to maintain texture, which seafood has been thermally processed to commercial sterility together with a brine containing a hydrolysis mixture of an aldonic acid and its lactones or a precursor thereof in water and a lesser amount of salt than is normally employed to maintain texture, said mixture being present in an amount adequate to have maintained the texture of the seafood during thermal processing, at least one of the flavor, color or odor properties of the seafood being improved compared to the same seafood similarly processed without said hydrolysis mixture or precursor thereof in a brine containing the amount of salt normally employed for processing the seafocd.

The invention also provides a method of processing seafood normally processed in a salt-containing brine to maintain texture, which method comprises combining the seafood in a brine containing a hydrolysis mixture of an aldonic acid and its lactones or a precursor thereof in water, and a lesser amount of salt than is normally employed to maintain texture, hermetically sealing the combined foodstuff in a container and thermally processing the seafood to commercial sterility, the amount of hydrolysis mixture or a precursor thereof being such that the texture of the seafood is maintained during such thermal processing, at least one of the flavor, color or odor properties of the seafood being improved compared to the same seafood commercially sterilized without said hydrolysis mixture or precursor thereof in a brine containing the amount of salt normally employed for processing the seafood.

Further, the invention provides a method of maintaining the texture of freshly harvested seafood normally processed in a salt-containing brine to maintain texture during thermal processing of the seafood to commercial sterility, which method comprises combining the seafood with a brine containing a hydrolysis mixture of an aldonic acid and its lactones or a precursor thereof in water, and a lesser amount of salt than is normally employed to maintain texture, hermetically sealing the combined foodstuff in a container and thermally processing the seafood to commercial sterility, the amount of hydrolysis mixture or precursor thereof being such that the texture of the seafood is maintained during such thermal processing, and at least one of the flavor, color or odor properties of the seafood being improved compared to the same seafood thermally processed without said hydrolysis mixture or precursor thereof, in a brine containing the amount of salt normally employed for processing the seafood.

Particular embodiments of the invention are as defined in the dependent claims.

An aldonic acid, preferably gluconic acid, is found to maintain the texture of seafood, making it unnecessary to employ large amounts of salt for this purpose prior to commercial sterilization of the product. Only small amounts of gluconic acid are necessary compared to the large amounts of salt previously required. For example, in accordance with the preferred method of combining gluconic acid with Louisiana shrimp, adding 1/2% to less than 1-1/2% (by weight) glucono-delta lactone (GDL) to an aqueous solution is adequate; a level greater than 1-1/2% tends to reduce the appeal. A small amount of salt may still be used in the blanch before sterilizing, but this is far from the amount normally needed to maintain good texture in the canning process. When the present invention is applied to shrimp, preferably the harvested shrimp is first blanched and rinsed, and afterwards GDL is included with the contents in the container; the container is then hermetically sealed and thermally processed. Because of the addition of an acid with its lactones, e.g. by combining the seafood with GDL, and the hydrolysis of the GDL to a mixture of gluconic acid and its lactones, the resulting shrimp has a texture and flavor similar to that of the fresh product. The levels and mild taste of the aldonic acids and the presence of the acid with its lactones results in a thermally processed seafood that does not have any acidic notes in flavor or aroma. The flavor is also improved by the substantial reduction in salt level.

Modes of carrying out the invention are now explained in more detail in the following description which is given by way of example only.

In accordance with this invention, the need for large amounts of added salt or of any added salt at all for maintaining the texture of certain seafoods, for example shrimp, through thermal processing is eliminated by combining the seafood with a mixture of an aldonic acid and its lactones, preferably gluconic acid and its lactones, and thermally processing the combination. It has been discovered that by combining a hydrolysis mixture of an aldonic acid and its lactones with seafood to be thermally processed, not only are the need for salt for texturizing and the salty taste eliminated or substantially reduced, but also the levels and mild taste of the acid present and the presence of the acid with its lactones, result in a thermally

EP 0 190 028 B1

processed seafood that does not have the objectionable pungent, sharp, acidic or pickled flavor notoriously characteristic of those acids commonly used in foods. The commonly used acids include acetic, citric, lactic, malic, hydrochloric, phosphoric and tartaric.

The aldonic acids which can be combined with the seafood in accordance with this invention are prepared for example by oxidation of sugars or aldoses, preferably from those having six carbon atoms, although they could be prepared from those having five carbon atoms. Those acids prepared from sugars having six carbon atoms are talonic, galactonic, idonic, gulonic, mannonic, gluconic, altronic and allonic (although currently these acids, with the exception of gluconic, may be unavailable commercially). These acids are respectively derived from their aldoses -- talose, glactose, idose, gulose, mannose, glucose, altrose and allose. Sugars having five carbon atoms are lyxose, xylose, arabinose and ribose.

Any suitable method or material can be employed to bring the hydrolysis mixture of the aldonic acid and its lactones into combination with the seafood. While the acid might be added by itself (since the acid, when in contact with moisture or water in the seafood contents, will be converted to a mixture of the acid and its lactones), doing so currently does not appear practical since aldonic acids are not, so far as we know, commercially available in crystalline form or in food grade. This is the case with the preferred gluconic acid. These acids may be commercially available in technical grade in aqueous solutions. For example, gluconic acid is so available in aqueous solutions stated to be about 50% (by weight) gluconic acid. These aqueous solutions of the acid are equilibrium mixtures of gluconic acid, and its lactones glucono-delta lactone and glucono-gamma lactone. Gluconic acid has a mild acid taste.

The preferred method for providing the hydrolysis mixture of the aldonic acid and its lactones to the seafood is to combine the seafood with a precursor of the aldonic acid. A precursor of the acid herein means a liquid, material or compound which adds the acid to, or forms or provides it in the seafood with which it is combined. Again, when the acid contacts moisture or water in or of the seafood, it will convert partially to and will exist with its lactones. Precursors of these acids which can be employed include their lactones themselves (which can be said to be latent acids since they hydrolize in water to form a mixture of the acid and its lactones), mixtures of these lactones, and salts of the acids in combination with certain strong acids. For example, precursors of the preferred gluconic acid which can be employed include glucono-delta lactone, glucono-gamma lactone, mixtures of these lactones, and gluconate salts in combination with the strong acid, hydrochloric. By far, the most preferred precursor for this invention is glucono-delta lactone (GDL). It is commercially available in food grade as a free-flowing, odorless, white powder. It has a sweet taste. Food grade solutions of GDL are also commercially available and can be employed. GDL is an inner ester of gluconic acid which when hydrolyzed forms gluconic acid. Hydrolysis occurs when GDL is combined with water, for example that of an (aqueous) brine or of or in the seafood. Hydrolysis of the glucono-delta lactone results in an equilibrium mixture of from about 55% to about 60% (by weight) gluconic acid and from about 45% to about 40% (by weight) of a mixture glucono-delta lactone and glucono-gamma lactone. The rate of acid formation is affected by the temperature, the pH value and concentration of the solution. Hydrolysis of delta lactones tends to be more rapid than hydrolysis of gamma lactones. In the absence of heat, hydrolysis tends to be slow. Heating the brine accelerates the hydrolysis reaction and is the preferred method. Heating the seafood also has the same effect. Like results would be expected to occur with the use of other lactones of other aldonic acids, e.g.galactono-delta lactone.

Examples of those salts which can be used in combination with certain strong acids (each suitable for food use), include sodium, potassium and calcium salts, for example, sodium, potassium and calcium gluconates. An example of an acid considered herein to be "strong" is one which will react with the acid salt and provide enough available hydrogen ions to form the desired aldonic acid in the seafood. Such an acid would by hydrochloric. Of course, the type, manner and/or amount of strong acid(s) employed should be in keeping with the desire of this invention that a sharp, strong or objectionable acid taste is not imparted to the seafood. If hydrochloric acid is used as the strong acid, all of it should be converted so that no such acid would remain, only some derived salt.

EXAMPLE

Louisiana shrimp, freshly caught, were mechanically peeled and deveined. The shrimp were of medium size which means 173.4 to 311.5 shrimps per kilogram (5.4 to 9.7 shrimps per ounce) of drained product. The pH of the raw shrimp to be processed ranged from 7.1 to 7.3. The shrimp were blanched for 1-1/2 minutes at 200°F (93°C) in a continuous blancher. The blanch solution was an aqueous solution containing 3.95% salt by weight and heated to 200°F (93°C). The shrimp were rinsed after the blanch to cool the shrimp and they were graded and immediately filled into cans (307 x 113; meaning 3-7/16 inches (87 mm) diameter, 1-13/16 inches (46 mm) high). The rinse removes some of the salt. Each can was check-weighed

4

to assure a fill weight of 4.3 oz (122 g). After filling, the commercial control cans (CC, Table 1) were passed through a conventional drip lane whereby the cans were filled with a brine solution which contained 4.8-5.0% salt by weight.

In accordance with the present invention the commercial brine solution was replaced with brine solutions to which had been added various amounts of GDL and 1.3% by weight salt dissolved in water. These brines were heated to 180-190°F (82-88°C) and employed as the canning brine for a series of other 307 x 113 cans (refer to Table 1, below). The GDL in the brines undergoes hydrolysis and thereby provides in the brine a solution of from about 55% to 60% (by weight) gluconic acid and a mixture of about 45% to 40% (by weight) glucono-delta lactone and glucono-gamma lactone.

All cans were steam-flow closed and were thermally processed in vertical still retorts. The thermal process used for the control cans and those of the present invention was a retort temperature of 261°F (143°C) for 5.43 minutes. The cans were atmospherically water-cooled to about 100°F (38°C) after processing and both sets of cans were stored at a controlled temperature of 80°F (27°C). The objective was to monitor the differences between the various cans to which GDL had been added and the commercial control cans in terms of the sensory characteristics of odor, color, flavor and texture, based on the GDL variable.

Two cans of each of the following code variables shown in Table 1 were submitted to a trained taste panel whose evaluations are given in Table 2.

Table 1

| Code Variables | % GDL added to the brine | % Salt Added to the brine |
|---|---|---|
| B | 0 | 1.3* |
| C | 0.5 | 1.3* |
| D | 1.0 | 1.3* |
| F | 1.5 | 1.3* |
| CC (Commercial Control) | 0 | 5 |

*Amount conventionally added in the brine to food products other than shrimp to provide a salt taste.

Table 2

| Sample Code | Aroma · | Flavor | Texture | Color |
|---|---|---|---|---|
| B | Some fishy note | Somewhat fishy | Soft or mushy | Slight gray pink |
| C | Very slight loss of fishy note<br><br>Three panel members reported an off-note described as slightly harsh, pungent or (amine) like | Cleaner shrimp note than the control | Slightly firm | Bright pink-red |
| D | Best aromatics of all samples. Fishy note decreased and shrimp note most evident; another comment was it had clean aroma | Better than control because of clean shrimp flavor, with slightly sweet flavor | Firm | Bright pink-red |
| F | Slight loss of aromatics | Downgraded because: slightly acid flavor, lower shrimp flavor | Flaky dry; firmest, too firm | Slightly less pink-red |
| CC | Shrimp house or fishy | Extremely salty, some-what fishy | Firm | Bright pink-red |

It was also noted by the panel that the cloudiness of the liquid (brine) in the can was obvious at the 1.5% GDL addition level, but barely noticeable at the 0.5% level. These liquids are termed "brine" in the canning industry regardless of salt content. Because of brine cloudiness at the 1.5% GDL level and the downgraded flavor, the preferred range of addition of GDL to brine for use with small and medium Louisiana shrimp according to the present invention is from about 0.5 to less than 1.5 percent by weight in water. Conceivably some GDL (a fraction of a percent) may be replaced by a small amount of an organic acidulant, such as citric or lactic acid, still to achieve equivalent results in accordance with this invention, and a small amount of salt (NaCl) may be used to boost or encourage the seafood flavor. Citric acid is not known to have ever been used to replace salt for texturing. In the amounts needed, the food product would be too strongly acidic.

We have found that glucono-delta lactone (GDL) when hydrolyzed to gluconic acid can perform the same action as citric acid in inhibiting sulfide build-up and its consequences. Such build-up occurs e.g. at the side-seam, the counter-sink area and the profile rings of container ends. Thus, when GDL is used alone in the brine, neither salt nor citric acid needs to be included since GDL performs their respective texturing and inhibiting formation.

**Claims**

1. A hermetically sealed package containing seafood normally processed in a salt-containing brine to maintain texture, which seafood has been thermally processed to commercial sterility together with a brine containing a hydrolysis mixture of an aldonic acid and its lactones or a precursor thereof in water and a lesser amount of salt than is normally employed to maintain texture, said mixture being present in an amount adequate to have maintained the texture of the seafood during thermal processing, at least one of the flavor, color or odor properties of the seafood being improved compared to the same seafood similarly processed without said hydrolysis mixture or precursor thereof in a brine containing the amount of salt normally employed for processing the seafood.

2. The package according to claim 1, wherein the aldonic acid and its lactones or a precursor thereof is present in an amount of about $\frac{1}{2}$ to less than $1\frac{1}{2}$ percent by weight in water.

3. The package according to claim 1 or claim 2 wherein the seafood is shellfish.

4. The package according to claim 3, wherein the seafood is shrimp.

5. The package according to any of claims 1, 2, 3 or 4, wherein the hydrolysis mixture is a mixture of gluconic acid and its lactones or a precursor thereof.

6. A method of processing a seafood normally processed in a salt-containing brine to maintain texture, which method comprises combining the seafood in a brine containing a hydrolysis mixture of an aldonic acid and its lactones or a precursor thereof in water, and a lesser amount of salt than is normally employed to maintain texture, hermetically sealing the combined foodstuff in a container and thermally processing the seafood to commercial sterility, the amount of hydrolysis mixture or a precursor thereof being such that the texture of the seafood is maintained during such thermal processing, at least one of the flavor, color or odor properties of the seafood being improved compared to the same seafood commercially sterilized without said hydrolysis mixture or precursor thereof in a brine containing the amount of salt normally employed for processing the seafood.

7. The method according to claim 6, wherein the aldonic acid and its lactones are present in an amount of about $\frac{1}{2}$ to less than $1\frac{1}{2}$ percent by weight in water.

8. The method according to claim 6 or claim 7, wherein the seafood is shellfish.

9. The method according to claim 8, wherein the seafood is shrimp.

10. The method according to any of claims 6 to 9, wherein the hydrolysis mixture is a mixture of gluconic acid and its lactones or a precursor thereof.

11. A method of maintaining the texture of freshly harvested seafood normally processed in a salt-containing brine to maintain texture during thermal processing of the seafood to commercial sterility, which method comprises combining the seafood with a brine containing a hydrolysis mixture of an aldonic acid and its lactones or a precursor thereof in water, and a lesser amount of salt than is normally employed to maintain texture, hermetically sealing the combined foodstuff in a container and thermally processing the seafood to commercial sterility, the amount of hydrolysis mixture or precursor thereof being such that the texture of the seafood is maintained during such thermal processing, and at least one of the flavor, color or odor properties of the seafood being improved compared to the same seafood thermally processed without said hydrolysis mixture or precursor thereof, in a brine containing the amount of salt normally employed for processing the seafood.

12. The method according to claim 11, wherein the aldonic acid and its lactones or a precursor thereof is present in an amount of about $\frac{1}{2}$ to less than $1\frac{1}{2}$ percent by weight in water.

13. The method according to claim 12, wherein the seafood is shellfish.

14. The method according to claim 11 or claim 12, wherein the seafood is shrimp.

15. The method according to any of claims 11 to 13, wherein the hydrolysis mixture is a mixture of

7

gluconic acid and its lactones or a precursor thereof.

16. A hermetically sealed package according to any of claims 1 to 5 in which the package is a metal container.

17. A method according to any of claims 6 to 15 in which the seafood is blanched in a liquid and rinsed before being filled into said container.

18. Use of aldonic acids or their lactones (eg. aldonic-delta lactones) or aldonic acid precursors alone or in combination to preserve the qualities eg. texture of seafood that is to be thermally processed.

19. Use of a mixture of an aldonic acid and at least one of its lactones, or a precursor of said acid mixture, to preserve the qualities eg. texture of seafood that is to be thermally processed.

**Revendications**

1. Emballage hermétiquement fermé, contenant un produit de la mer qui est normalement traité dans une saumure contenant du sel pour lui conserver sa contexture, lequel produit de la mer a été traité thermiquement à la stérilité commerciale en même temps qu'une saumure contenant un mélange d'hydrolyse d'un acide aldonique et de ses lactones ou un précurseur de celui-ci dans de l'eau, avec une moindre quantité de sel que celle qui est normalement employée pour conserver la texture, ledit mélange étant présent dans une quantité suffisante pour avoir conservé la contexture du produit de la mer pendant son traitement thermique, l'une au moins des propriétés de saveur, de couleur ou d'odeur du produit de la mer étant améliorée en comparaison du même produit de la mer traité de façon semblable en l'absence dudit mélange d'hydrolyse ou du précurseur de celui-ci dans une saumure contenant la quantité de sel normalement employée pour traiter le produit de la mer.

2. Emballage selon la revendication 1, dans lequel l'acide aldonique et ses lactones ou un précurseur de ceux-ci sont présents dans une quantité d'environ 0,5 à moins de 1,5% en poids dans de l'eau.

3. Emballage selon la revendication 1 ou 2, dans lequel le produit de la mer est un mollusque ou un crustacé.

4. Emballage selon la revendication 3, dans lequel le produit de la mer est une crevette.

5. Emballage selon l'une quelconque des revendications 1 à 4, dans lequel le mélange d'hydrolyse est un mélange d'acide gluconique et de ses lactones ou un précurseur de celui-ci.

6. Procédé de traitement d'un produit de la mer qui est normalement traité dans une saumure contenant du sel pour lui conserver sa contexture, lequel procédé comprend les opérations consistant à combiner le produit de la mer à une saumure contenant un mélange d'hydrolyse d'un acide aldonique et de ses lactones ou un précurseur de celui-ci dans de l'eau, avec une moindre quantité de sel que celle qui est normalement employée pour conserver la contexture, à enfermer hermétiquement le produit de la mer combiné dans un récipient, et à traiter thermiquement le produit de la mer à la stérilité commerciale, la quantité du mélange d'hydrolyse ou du précurseur de celui-ci étant telle que la contexture du produit de la mer soit conservée pendant ce traitement thermique, l'une au moins des propriétés de saveur, de couleur ou d'odeur du produit de la mer étant améliorée en comparaison du même produit de la mer stérilisé au degré commercial en l'absence dudit mélange d'hydrolyse ou du précurseur de celui-ci dans une saumure contenant la quantité de sel normalement employée pour traiter le produit de la mer.

7. Procédé selon la revendication 6, dans lequel l'acide aldonique et ses lactones sont présents dans une quantité d'environ 0,5 à moins de 1,5% en poids dans de l'eau.

8. Procédé selon la revendication 6 ou 7, dans lequel le produit de la mer est un mollusque ou un crustacé.

9. Procédé selon la revendication 8, dans lequel le produit de la mer est une crevette.

10. Procédé selon l'une quelconque des revendications 6 à 9, dans lequel le mélange d'hydrolyse est un mélange d'acide gluconique et de ses lactones ou un précurseur de celui-ci.

11. Procédé pour conserver la contexture d'un produit de la mer fraîchement pêché qui est normalement traité dans une saumure contenant du sel pour lui conserver sa contexture pendant son traitement thermique à un degré commercial de stérilité, lequel procédé comprend les opérations consistant à combiner le produit de la mer à une saumure contenant un mélange d'hydrolyse d'un acide aldonique et de ses lactones ou un précurseur de celui-ci dans de l'eau, avec une moindre quantité de sel que celle qui est normalement employée pour conserver la contexture, à enfermer hermétiquement le produit de la mer combiné dans un récipient, et à traiter thermiquement le produit de la mer à la stérilité commerciale, la quantité du mélange d'hydrolyse ou du précurseur de celui-ci étant telle que la contexture du produit de la mer soit conservée pendant ce traitement thermique et que l'une au moins des propriétés de saveur, de couleur ou d'odeur du produit de la mer soit améliorée en comparaison du même produit de la mer traité thermiquement en l'absence dudit mélange d'hydrolyse ou du précurseur de celui-ci dans une saumure contenant la quantité de sel normalement employée pour traiter le produit de la mer.

12. Procédé selon la revendication 11, dans lequel l'acide aldonique et ses lactones ou un précurseur ce ceux-ci sont présents dans une quantité d'environ 0,5 à moins de 1,5% en poids dans de l'eau.

13. Procédé selon la revendication 12, dans lequel le produit de la mer est un molllusque ou un crustacé.

14. Procédé selon la revendication 11 ou 12, dans lequel le produit de la mer est une crevette.

15. Procédé selon l'une quelconque des revendications 11 à 13, dans lequel le mélange d'hydrolyse est un mélange d'acide gluconique et de ses lactones ou d'un précurseur de ceux-ci.

16. Emballage hermétiquement fermé selon l'une quelconque des revendications 1 à 5, dans lequel l'emballage est un récipient de métal.

17. Procédé selon l'une quelconque des revendications 6 à 15, dans lequel le produit de la mer est blanchi dans un liquide et rincé avant d'être chargé dans ledit récipient.

18. Utilisation d'acide aldonique ou de ses lactones (par exemple des aldonico-$\delta$-lactones) ou de précurseurs de l'acide aldonique, seuls ou en combinaison, pour conserver les qualités, par exemple la texture, d'un produit de la mer qui doit être soumis à un traitement thermique.

19. Utilisation d'un mélange d'un acide aldonique et d'au moins l'une de ses lactones, ou d'un précurseur dudit mélange d'acide, pour conserver les qualités, par exemple la texture, d'un produit de la mer qui doit être soumis à un traitement thermique.

**Patentansprüche**

1. Eine hermetisch versiegelte Verpackung, die Meeresfrüchte enthält, die normalerweise in einer salzhaltigen Lauge zum Erhalten ihrer Struktur verarbeitet werden, wobei diese Meeresfrüchte bis zur kommerziellen Sterilität zusammen mit einer Lauge, die ein Hydrolysegemisch aus einer Aldonsäure und ihren Lactonen oder eine Vorstufe derselben in Wasser und eine geringere Menge Salz enthält, als sie normalerweise zum Aufrechterhalten der Struktur verwendet wird, wärmebehandelt worden sind, wobei das Gemisch in einer ausreichenden Menge vorhanden ist, um die Struktur der Meeresfrüchte während der Wärmebehandlung aufrechtzuerhalten, und wenigstens eine der Eigenschaften Geschmack, Farbe oder Geruch der Meeresfrüchte verbessert wird im Vergleich zu den gleichen Meeresfrüchten die in gleicher Weise ohne das besagte Hydrolysegemisch oder die Vorstufe desselben in einer Lauge bearbeitet worden sind, die die Menge Salz enthält, die normalerweise zur Verarbeitung der Meeresfrüchte verwendet wird.

2. Die Verpackung nach Anspruch 1, bei der die Aldonsäure und ihre Lactone oder eine Vorstufe derselben in einer Menge von etwa 1/2 bis weniger als 1 1/2 Gew.-% in Wasser vorhanden sind.

**3.** Die Verpackung nach Anspruch 1 oder Anspruch 2, bei der die Meeresfrüchte Schalentiere sind.

**4.** Die Verpackung nach Anspruch 3, bei der die Meeresfrüchte Garnelen sind.

**5.** Die Verpackung nach einem der Ansprüche 1, 2, 3 oder 4, bei der das Hydrolysegemisch ein Gemisch aus Gluconsäure und ihren Lactonen oder einer Vorstufe derselben ist.

**6.** Ein Verfahren zum Verarbeiten von Meeresfrüchten, die normalerweise in einer salzhaltigen Lauge zum Erhalten ihrer Struktur verarbeitet werden, wobei das Verfahren das Kombinieren der Meeresfrüchte mit einer Lauge, die ein Hydrolysegemisch aus einer Aldonsäure und ihren Lactonen oder eine Vorstufe derselben in Wasser und eine geringere Menge Salz, als normalerweise zum Erhalten der Struktur verwendet wird, enthält, hermetisches Versiegeln des kombinierten Lebensmittels in einem Behälter und Wärmebehandlung der Meeresfrüchte bis zu kommerzieller Sterilität umfaßt, wobei die Menge des Hydrolysegemisches oder einer Vorstufe derselben derart ist, daß die Struktur der Meeresfrüchte während einer derartigen Wärmebehandlung aufrechterhalten bleibt, wenigstens eine der Eigenschaften Geschmack, Farbe oder Geruch der Meeresfrüchte verbessert wird im Vergleich zu den gleichen Meeresfrüchten, die kommerziell ohne das besagte Hydrolysegemisch oder dessen Vorstufe in einer Lauge sterilisiert worden sind, die die Menge Salz enthält, die normalerweise zum Verarbeiten der Meeresfrüchte verwendet wird.

**7.** Das Verfahren nach Anspruch 6, bei dem die Aldonsäure und ihre Lactone in einer Menge von etwa 1/2 bis weniger als 1 1/2 Gew.-% in Wasser vorhanden sind.

**8.** Das Verfahren nach Anspruch 6 oder Anspruch 7, bei dem die Meeresfrüchte Schalentiere sind.

**9.** Das Verfahren nach Anspruch 8, bei dem die Meeresfrüchte Garnelen sind.

**10.** Das Verfahren nach einem der Ansprüche 6 bis 9, bei dem das Hydrolysegemisch ein Gemisch aus Gluconsäure und ihren Lactonen oder eine Vorstufe derselben ist.

**11.** Ein Verfahren zum Aufrechterhalten der Struktur von frisch geernteten Meeresfrüchten, die normalerweise in einer salzhaltigen Lauge zum Aufrechterhalten ihrer Struktur während einer Wärmebehandlung der Meeresfrüchte bis zu kommerzieller Sterilität verarbeitet werden, wobei das Verfahren das Kombinieren der Meeresfrüchte mit einer Lauge, die ein Hydrolysegemisch aus einer Aldonsäure und ihren Lactonen oder einer Vorstufe derselben in Wasser und eine kleinere Menge Salz,als sie normalerweise zum Erhalten der Struktur verwendet wird, enthält, hermetisches Versiegeln des kombinierten Lebensmittels in einem Behälter und Wärmebehandlung der Meeresfrüchte bis zu kommerzieller Sterilität umfaßt, wobei die Menge des Hydrolysegemisches oder der Vorstufe derselben so ist, daß die Struktur der Meeresfrüchte während solch einer Wärmebehandlung aufrechterhalten bleibt und wenigstens eine der Eigenschaften Geschmack, Farbe oder Geruch der Meeresfrüchte verbessert wird im Vergleich zu den gleichen Meeresfrüchten, die ohne das besagte Hydrolysegemisch oder die Vorstufe desselben in einer Lauge wärmebehandelt werden, die die Menge Salz enthält, die normalerweise zum Verarbeiten der Meeresfrüchte verwendet wird.

**12.** Das Verfahren nach Anspruch 11, bei dem die Aldonsäure und ihre Lactone oder eine Vorstufe derselben in einer Menge von etwa 1/2 bis weniger als 1 1/2 Gew.-% in Wasser vorhanden sind.

**13.** Das Verfahren nach Anspruch 12, bei dem die Meeresfrüchte Schalentiere sind.

**14.** Das Verfahren nach Anspruch 11 oder Anspruch 12, bei dem die Meeresfrüchte Garnelen sind.

**15.** Das Verfahren nach einem der Ansprüche 11 bis 13, bei dem das Hydrolysegemisch ein Gemisch von Gluconsäure und ihren Lactonen oder eine Vorstufe derselben ist.

**16.** Eine hermetisch versiegelte Verpackung nach einem der Ansprüche 1 bis 5, wobei die Verpackung ein Metallbehälter ist.

**17.** Ein Verfahren nach einem der Ansprüche 6 bis 15, bei dem die Meeresfrüchte in einer Flüssigkeit blanchiert werden und vor dem Einfüllen in den Behälter gespült werden.

18. Verwendung von Aldonsäuren oder ihren Lactonen (zum Beispiel Aldonsäure-delta-lactonen) oder Aldonsäure-Vorstufen allein oder in Kombination zum Erhalten der Qualitäten,zum Beispiel der Struktur von Meeresfrüchten, die wärmebehandelt werden sollen.

19. Verwendung eines Gemisches aus einer Aldonsäure und wenigstens einer ihrer Lactone oder einer Vorstufe von diesem Säuregemisch zum Erhalten der Qualitäten, zum Beispiel der Struktur von Meeresfrüchten, die wärmebehandelt werden sollen.